# EUROPEAN PATENT APPLICATION

(11) **EP 4 620 650 A1**
(43) Date of publication of application: **24.09.2025**
(21) Application number: 24164406.1
(22) Date of filing: 19.03.2024
(51) Int. Cl.: B29C 45/03, B29C 37/00, B29C 45/18, B29C 45/46, B29C 45/64, B29C 45/66

(54) **TRACEABLE LOW-PRESSURE INJECTION MOLDING APPARATUS**

(71) Applicant: LPMS International Ltd, Dongguan City, Guangdong Province (CN)
(72) Inventor: DU, YingKuan, Dongguan City, Guangdong Province, (CN)
(74) Representative: Wittmann, Günther

(57) **Abstract**

A traceable low-pressure injection molding apparatus includes a frame, a first code scanning gun and a second code scanning gun. The frame includes a machine station. The machine station is provided with a glue placing area, a heating mechanism, an injection molding mechanism, and a clamping mechanism. The glue placing area is used to place a plurality of barrels. Each of the barrels is provided with a glue code. The clamping mechanism is located above the glue placing area, the heating mechanism, and the injection molding mechanism to clamp the barrels and transfer between the glue placing area, the heating mechanism, and the injection molding mechanism, in order to use glue in the barrels for manufacturing a product. The first code scanning gun is used to scan the glue code. The second code scanning gun is used to scan a product code of the product. The product code, the glue code and the injection molding parameters can be further bonded together and uploaded to the database to achieve the traceability of the product.

## Description

### BACKGROUND OF THE INVENTION

### Field of the Invention

The invention relates to a traceable low-pressure injection molding apparatus, which is an apparatus used for low-pressure injection molding. In particular, it refers to a low-pressure injection molding apparatus with traceable glue information and injection molding parameters.

### Description of the Related Art

Low-pressure injection molding is a new injection molding process between potting and high-pressure injection molding. The low-pressure injection molding process is a packaging process that injects hot melt adhesive material into the mold at a very low injection pressure (1.5 to 40 bar) and solidifies it quickly (a few seconds to a few minutes).

The problems with general low-pressure injection molding apparatus are as follows:
1. The injection molding apparatus will first pour all the plastic particles into the cavity at one time and then perform the heating and melting process. During the continuous using process, the glue is added as it is used, and the newly added glue is mixed with the original glue. Adding a large amount of plastic particles at one time will be accompanied by some problems. If there are problems with the plastic particles, all injection molding products will be affected;
2. As new and old plastic materials are added together, it is impossible to know which batch of plastic material is used for a specific injection molding product, making the injection molding product non-traceable.

### BRIEF SUMMARY OF THE INVENTION

To solve the problems of using low-pressure injection molding apparatus, the traceable low-pressure injection molding apparatus of the present invention includes a frame, a first code scanning gun and a second code scanning gun. The frame includes a machine station. The machine station is provided with a glue placing area, a heating mechanism, an injection molding mechanism, and a clamping mechanism. The glue placing area is used to place a plurality of barrels. Each of the barrels is provided with a glue code. The clamping mechanism is located above the glue placing area, the heating mechanism, and the injection molding mechanism to clamp the barrels and transfer between the glue placing area, the heating mechanism, and the injection molding mechanism, in order to use glue in the barrels for manufacturing a product. The first code scanning gun is installed on the machine station and located adjacent to the heating mechanism. The first code scanning gun is used to scan the glue code. The second code scanning gun is installed on the machine station and located adjacent to the injection molding mechanism. The second code scanning gun is used to scan a product code of the product.

Accordingly, a plurality of barrels are stored in the glue placing area. The barrels can be heated in batches so that new glue and old glue are not mixed together. The barrel is replaced after each use, and thus there will be no residual old glue when injecting glue. Through the first code scanning gun and the second code scanning gun, the barrel and the injection molding product are scanned and recorded respectively. The product code of the product, the glue code of the barrel and the injection molding parameters can be bonded together and uploaded to the database. Afterwards, when it is needed to scan the product code on the injection molding product, the glue information used in the product will be quickly indicated along with the injection molding parameters, effectively providing traceability for product monitoring.

In a preferred embodiment, the glue placing area comprises a support station and an assembly box. The support station is fixed on a top surface of the machine station. The assembly box is disposed on the support station. The assembly box comprises a hoarding body and a barrel fixing plate. The hoarding body is arranged on a periphery of the assembly box. The barrel fixing plate is arranged above an interior of the hoarding body so that a space for placing the barrels is formed below the interior of the hoarding body. The barrel fixing plate is provided with a plurality of openings. The barrels are placed within the hoarding body and the barrel fixing plate through the openings.

In a preferred embodiment, a support frame is provided on each side of the machine station, and a protective cover door is provided on the support frame.

In a preferred embodiment, the protective cover door is composed of a plurality of folding doors.

In a preferred embodiment, the heating mechanism comprises a microwave box, a glue access port, and a cover. The microwave box is disposed on the machine station. The glue access port is disposed on a top surface of the microwave box. The glue access port is used to transfer the barrels into the microwave box. The cover is used to cover the glue access port.

In a preferred embodiment, the injection molding mechanism comprises a glue insulation barrel, a glue injection gun pump and a driving source. The glue insulation barrel, the glue gun pump and the driving source are all arranged on the frame. The glue insulation barrel is used to place the heated barrels. The glue insulation barrel and the glue injection gun pump are connected through a material connecting pipe. One end of the driving source is connected to one end of the glue injection gun pump.

In a preferred embodiment, the clamping mechanism comprises a first direction transmission device, a second direction transmission device, a third direction transmission device and a robotic arm.

In a preferred embodiment, the first direction transmission device comprises a first direction track, a first direction sliding seat, a first direction transmission shaft and a first direction driving source. The first direction track is parallel to a first direction. The first direction refers to front and rear directions of the machine station. The first direction track is set above the machine station. The first direction sliding seat is set above the first direction track. The first direction transmission shaft is pivoted on the first direction sliding seat. The first direction driving source is provided at one end of the first direction transmission shaft. The second direction transmission device comprises a second direction track, a second direction sliding seat, a second direction transmission shaft, a second direction driving source and a second direction transmission nut. The second direction track is parallel to a second direction. The second direction refers to left and right directions of the machine station. The second direction track is set on the first direction sliding seat. The second direction sliding seat is set on the second direction track. The second direction transmission shaft is pivoted on the second direction sliding seat. The second direction transmission shaft is also parallel to the second direction. The second direction driving source is arranged at one end of the second direction transmission shaft. The second direction transmission nut is provided on the second direction transmission shaft. One side of the second direction transmission nut is arranged below the second direction sliding seat. The third directional transmission device comprises a third direction track, a third direction sliding seat, a third direction driving source, a third direction transmission shaft, a third direction transmission nut and a rotation driving source. The third direction track is parallel to a third direction. The third direction refers to up and down directions of the machine station. One end of the third direction track is fixed on the second direction sliding seat. The third direction sliding seat is installed on the third direction track. The third direction driving source is also fixed on the second direction sliding seat. One end of the third direction transmission shaft is arranged at one end of the direction driving source. The third direction transmission shaft is also parallel to the third direction. The third direction transmission nut is provided on the third direction transmission shaft. The third direction transmission nut is arranged at one side of the third direction sliding seat. The rotation driving source is fixed at a lower end of the third direction sliding seat. The robotic arm is fixed at a lower end of the rotation driving source.

### BRIEF DESCRIPTION OF THE DRAWINGS

[Figure 1] illustrates a three-dimensional schematic diagram of the closed folding door of the traceable low-pressure injection molding apparatus of the present invention.
[Figure 2] illustrates a three-dimensional schematic diagram of the opened folding door of the traceable low-pressure injection molding apparatus of the present invention.
[Figure 3] illustrates a three-dimensional schematic diagram of the glue placing area, the heating mechanism, and the injection molding mechanism of the traceable low-pressure injection molding apparatus of the present invention.
[Figure 4] illustrates a three-dimensional schematic diagram from another angle of the glue placing area, the heating mechanism, and the injection molding mechanism of the traceable low-pressure injection molding apparatus of the present invention.
[Figure 5] illustrates a partial three-dimensional schematic diagram of the glue placing area, the heating mechanism, and the injection molding mechanism of the traceable low-pressure injection molding apparatus of the present invention.
[Figure 6] illustrates a three-dimensional schematic diagram of the clamping mechanism of the traceable low-pressure injection molding apparatus of the present invention.
[Figure 7] illustrates the first direction of movement of the clamping mechanism of the traceable low-pressure injection molding apparatus of the present invention.
[Figure 8] illustrates the second direction of movement of the clamping mechanism of the traceable low-pressure injection molding apparatus of the present invention.
[Figure 9] illustrates a three-dimensional schematic diagram of the third direction transmission device of the traceable low-pressure injection molding apparatus of the present invention.
[Figure 10] illustrates a schematic three-dimensional view from another angle of the third direction transmission device of the traceable low-pressure injection molding apparatus of the present invention.
[Figure 11] illustrates a schematic three-dimensional view of the third direction of movement for the third direction transmission device of the traceable low-pressure injection molding apparatus of the present invention.

### DETAILED DESCRIPTION OF THE INVENTION

Other technical contents, features and effects of the present invention will be clearly presented in the following detailed description of the preferred embodiment with reference to the drawings.

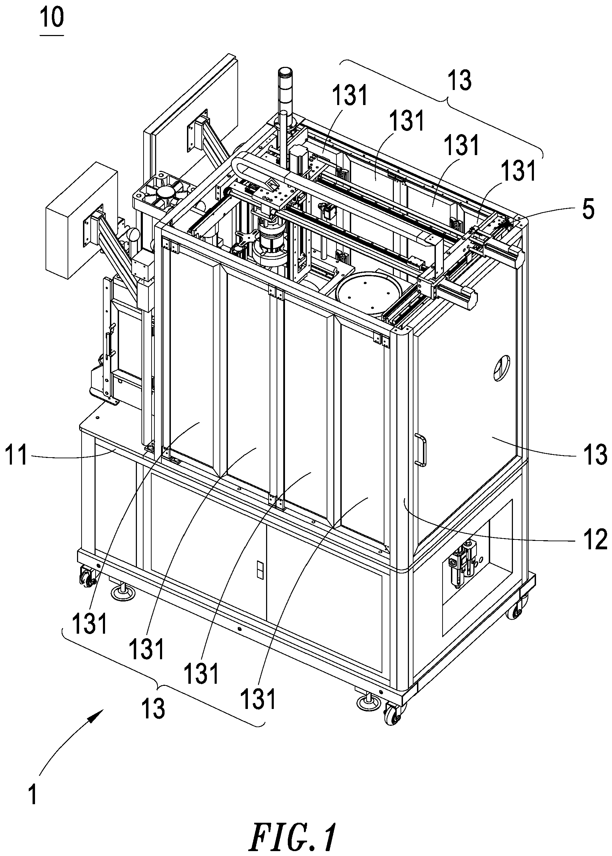

The present invention is a traceable low-pressure injection molding apparatus. Please refer to Figures 1-2. As shown in the figure, in the embodiment, the traceable low-pressure injection molding apparatus 10 includes a frame 1, a glue placing area 2, a heating mechanism 3, an injection molding mechanism 4 and a clamping mechanism 5. The frame 1 is used to carry the glue placing area 2, the heating mechanism 3, the injection molding mechanism 4 and the clamping mechanism 5.

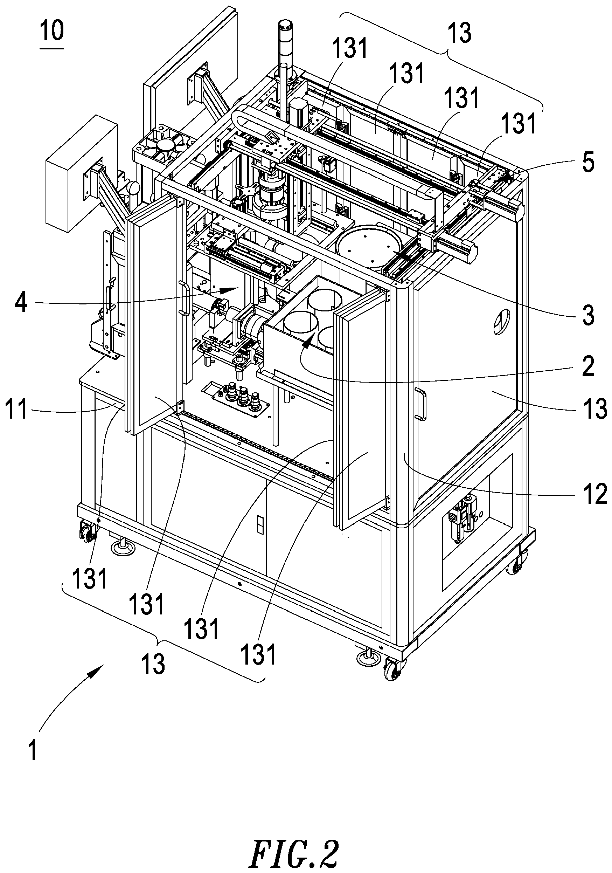

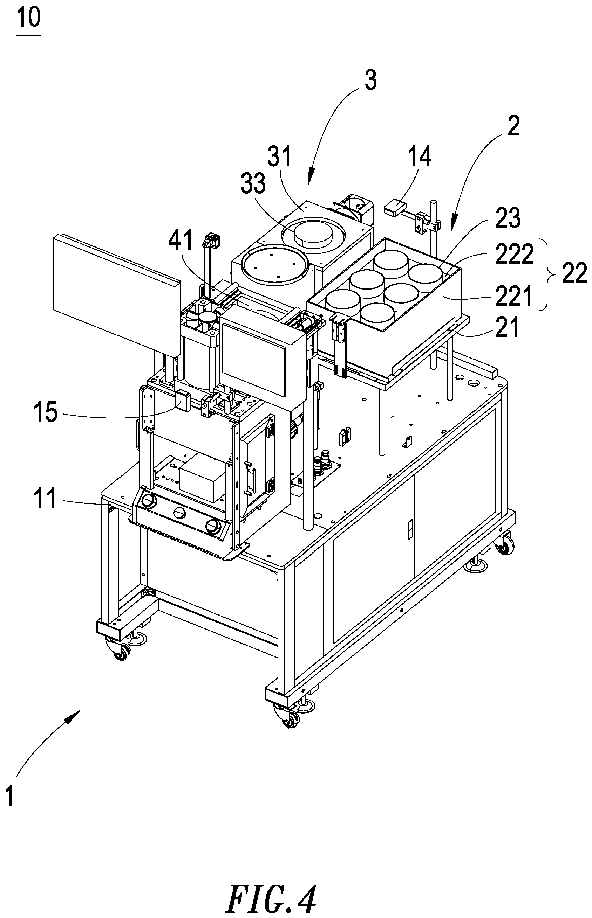

In the embodiment, please refer to Figures 2-4, the frame 1 includes a machine station 11, a support frame 12, a protective cover door 13, a first code scanning gun 14 and a second code scanning gun 15. The support frames 12 are evenly arranged on the front, rear, left and right sides of the machine station 11. The support frames 12 on the front and rear sides are provided with the protective cover doors 13. The protective cover doors 13 are composed of a plurality of folding doors 131. In an example, the tracks are provided on the inner edge of the support frame 12, and the sliders combined with the tracks are provided above and below each of the folding doors 131. Each folding door 131 is hinged together in pairs. During the process of opening the protective cover door 13, each slider is sliding in the track towards the outer side of the support frame 12, and each set of folding doors 131 can be folded. In addition, during the process of closing the protective cover door 13, each folding door 131 is sliding in the track toward the inner side of the support frame 12, and each set of folding doors 131 can be flattened into a flat surface. In this way, through the foldability of the door, it can effectively save space and avoid occupying more space when the traditional folio door structure opens the door. Furthermore, the first code scanning gun 14 and the second code scanning gun 15 are respectively installed on the machine station 11. The first code scanning gun 14 is located adjacent to the heating mechanism 3, and the second code scanning gun 15 is located adjacent to the injection molding mechanism 4.

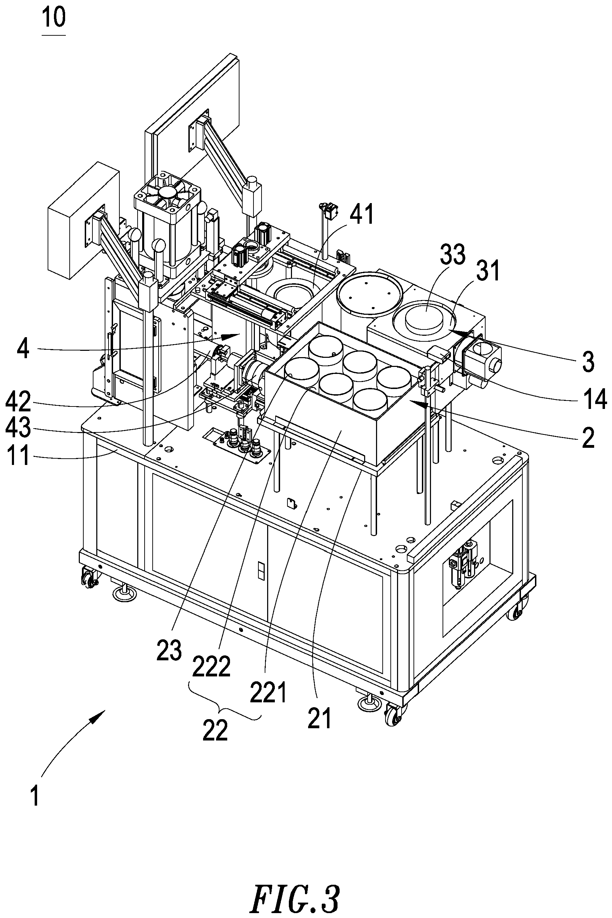

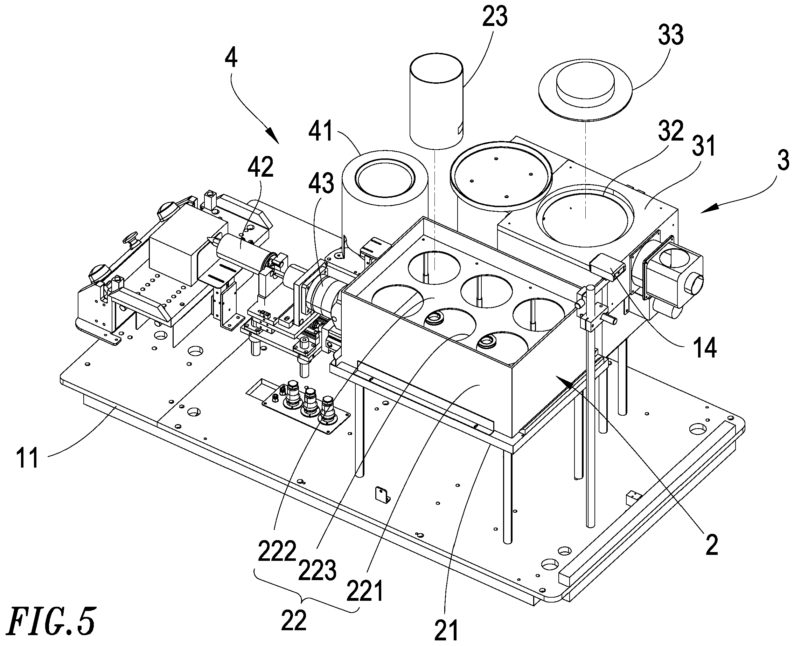

In the embodiment, please refer to Figures 3-5, the glue placing area 2 includes a support station 21, an assembly box 22 and a plurality of barrels 23. The support station 21 is fixed on the top surface of the machine station 11. The assembly box 22 is disposed on the support station 21. Each barrel 23 is arranged in the assembly box 22. In an example, the assembly box 22 includes a hoarding body 221 and a barrel fixing plate 222. The hoarding body 221 is disposed on the periphery of the assembly box 22, and the barrel fixing plate 222 is disposed above the interior of the hoarding body 221, so that a space for placing the barrels 23 is formed below the interior of the hoarding body 221. The barrel fixing plate 222 is provided with a plurality of openings 223. The barrel 23 can be placed in the hoarding body 221 and the barrel fixing plate 222 through the openings 223. Accordingly, each barrel 23 is placed neatly and stably inside the hoarding body 221, which improves the placement stability of the barrels 23 and the waiting for being clamped by the clamping mechanism 5.

Afterwards, there are six barrels 23, and the barrels 23 are evenly distributed in the support station 21. In some embodiments, the number of barrels 23 can also be eight barrels, ten barrels, etc. The number of barrels 23 is not limited by the embodiment. The number of barrels 23 can be reasonably increased or decreased based on actual needs, which all fall within the scope of the plurality of barrels 23 in the embodiment.

In the embodiment, the heating mechanism 3 includes a microwave box 31, a glue access port 32 and a cover 33. The microwave box 31 is disposed on the machine station 11, and the height of the microwave box 31 is consistent with the height of the microwave box 31 on the support station 21. The consistent height means that the height of the top surface of the microwave box 31 and the height of the top surface of the assembly box 22 do not have a significant difference in height, but are not at exactly the same height and position. Such a configuration allows the barrel 23 to be less prone to collision as it is clamped from the interior of assembly box 22 to the interior of microwave box 31. The top surface of the microwave box 31 disposed on the machine station 11 is provided with a glue access port 32. Through the glue access port 32, the barrel 23 can be put into the microwave box 31. The cover 33 is used to cover the glue access port 32.

In the embodiment, the injection molding mechanism 4 includes a glue insulation barrel 41, a glue injection gun pump 42 and a driving source 43. The glue insulation barrel 41, the glue injection gun pump 42 and the driving source 43 are all arranged on the frame 1. The glue insulation barrel 41 is used to place the heated and melted barrel 23. The glue insulation barrel 41 and the glue injection gun pump 42 are connected through a material connecting pipe. The driving end of the driving source 43 is connected to the power end of the glue injection gun pump 42. The driving source 43 can be a motor, a hydraulic cylinder, an oil cylinder, or a pneumatic cylinder, etc. The driving source 43 is used to adjust and control the glue injection pressure. In one example, the driving source 43 is electrically connected to the operation panel, and the required pressure is set on the operation panel. The driving source 43 outputs the corresponding torque instantly according to the set pressure to drive the glue injection gun pump 42 to rotate and then perform injection molding. The corresponding torque is fed back and displayed on the operation panel in the form of pressure, so that the glue injection pressure in the injection molding mechanism 4 remains stable. At the same time, it is easy to merely adjust the pressure on the operation panel.

To avoid the traditional use of safety valves to control the glue injection pressure, the machine needs to be installed with safety valves and corresponding air pressure regulating valves. The glue injection pressure is controlled by adjusting the air pressure at the inlet side of the safety valve. This method is complicated in structure and inaccurate in adjustment, and the safety valve will be jammed or leaking after a long time.

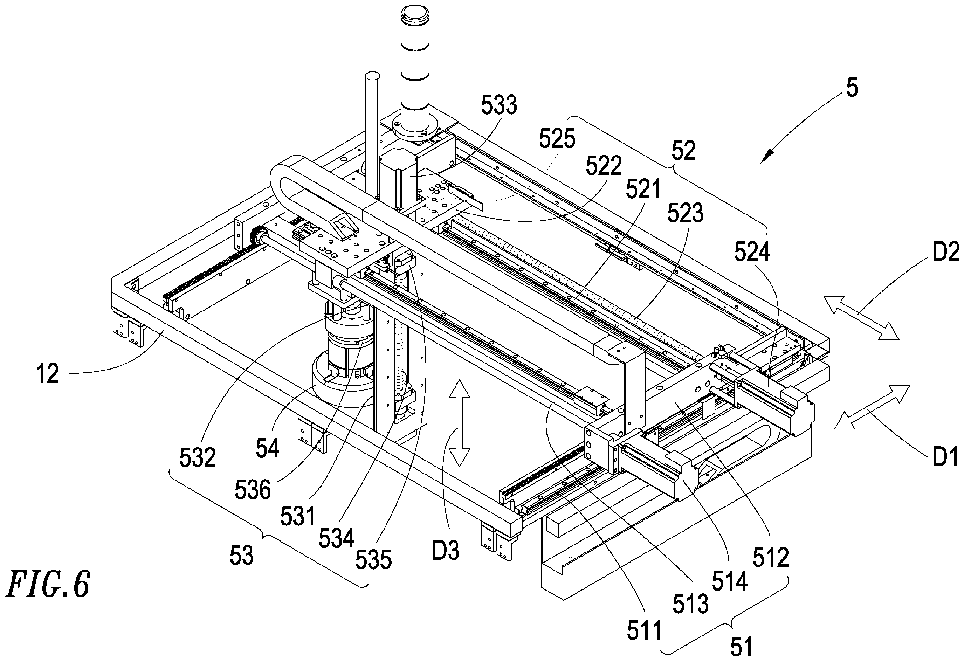

In the embodiment, please refer to Figure 6, the clamping mechanism 5 includes a first direction transmission device 51, a second direction transmission device 52, a third direction transmission device 53 and a robotic arm 54. The first direction transmission device 51, the second direction transmission device 52 and the third direction transmission device 53 are all used to drive the robotic arm 54 to perform linear motion, which respectively correspond to three different axial directions, further enabling the robotic arm 54 to perform 3-axis linear motions.

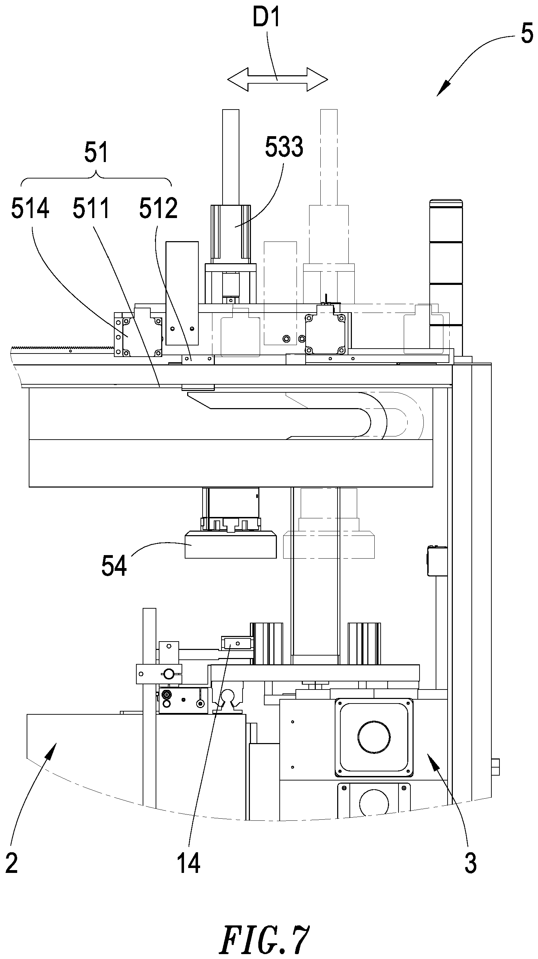

Regarding the first direction transmission device 51, please refer to Figures 6-7. The first direction transmission device 51 includes a first direction track 511, a first direction sliding seat 512, a first direction transmission shaft 513 and a first direction driving source 514. The first direction track 511 is parallel to the first direction D1. In the embodiment, the first direction D1 is toward the front and rear directions of the machine station 11. There are two first direction tracks 511 respectively installed on the left and right sides of the top of the support frame 12. There are also two first direction sliding seats 512 respectively installed on two first direction tracks 511. In one example, the first direction track 511 can be a protruding structure, and the first direction sliding seat 512 can be a concave structure allowing the first direction sliding seat 512 to be embedded in the first direction track 511 for sliding. The first direction transmission shaft 513 is transversely and pivotally disposed on the two first direction sliding seats 512. The first direction driving source 514 is provided at one end of the first direction transmission shaft 513. The first direction driving source 514 can be a motor. It can drive the first direction transmission shaft 513 to rotate to drive the first direction sliding seat 512 to slide on the first direction track 511. In practice, the first directional transmission shaft 513 drives the first directional sliding seat 512 by means of gears, which are provided on the first directional transmission shaft 513. The racks are provided next to the first directional sliding seat 512, and the racks mesh with the gears. In this way, when the first direction transmission shaft 513 rotates, the gear is driven to rotate, causing the gear to displace on the rack, and further drives the first direction sliding seat 512 back and forth on the first direction track 511 toward the first direction D 1.

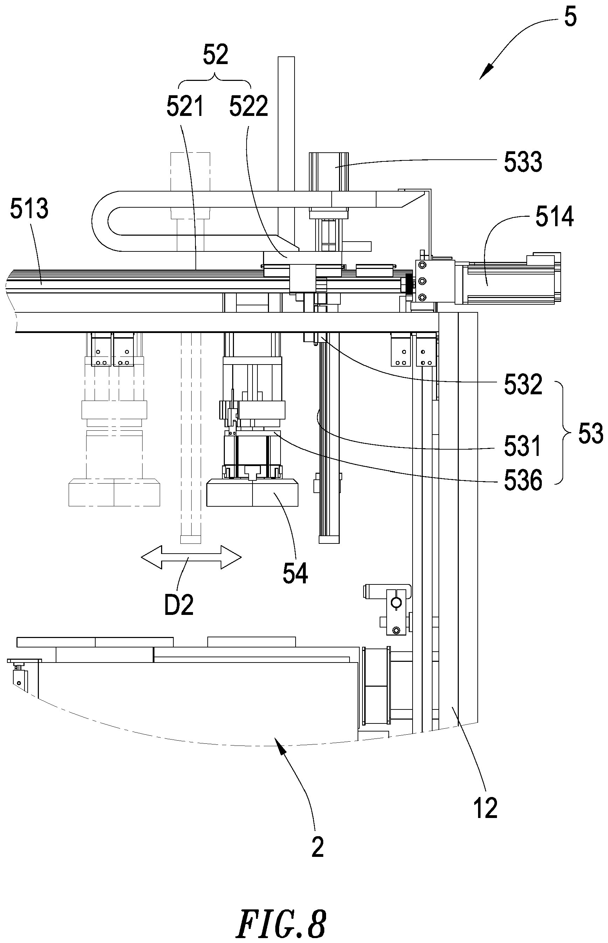

Regarding the second direction transmission device 52, please refer to Figures 6 and 8. The second direction transmission device 52 includes a second direction track 521, a second direction sliding seat 522, a second direction transmission shaft 523, a second direction driving source 524 and a second direction transmission nut 525. The second direction track 521 is parallel to the second direction D2. In the embodiment, the second direction D2 is toward the left and right directions of the machine station 11. There are two second direction tracks 521, and each of them is placed transversely and installed on two first directional sliding seats 512. The second direction sliding seat 522 is placed transversely and installed on two second direction tracks 521. In one example, the second direction track 521 can have a protruding structure, and the second direction sliding seat 522 can have two concave structures, so that the second direction sliding seat 522 can be embedded in the second direction track 521 and slide. The second direction transmission shaft 523 is transversely and pivotally arranged on the two second direction sliding seats 522, and the second direction transmission shaft 523 is also parallel to the second direction D2. The second direction driving source 524 is arranged at one end of the second direction transmission shaft 523. The second direction driving source 524 can be a motor, which can drive the second direction transmission shaft 523 to rotate for driving the second direction sliding seat 522 to slide on the second direction track 521. In practice, the second direction transmission shaft 523 is a ball screw with a thread above it, and a second direction transmission nut 525 is on the thread. The second direction transmission nut 525 is disposed below the second direction sliding seat 522. When the second direction transmission shaft 523 rotates, the kinetic energy of the rotation of the second direction transmission shaft 523 can be converted into the kinetic energy of linear displacement through the second direction transmission nut 525. In this way, when the second direction transmission nut 525 is displaced, it can be displaced together with the second direction sliding seat 522. Furthermore, the second direction sliding seat 522 can be driven to slide back and forth on the second direction track 521 toward the second direction D2.

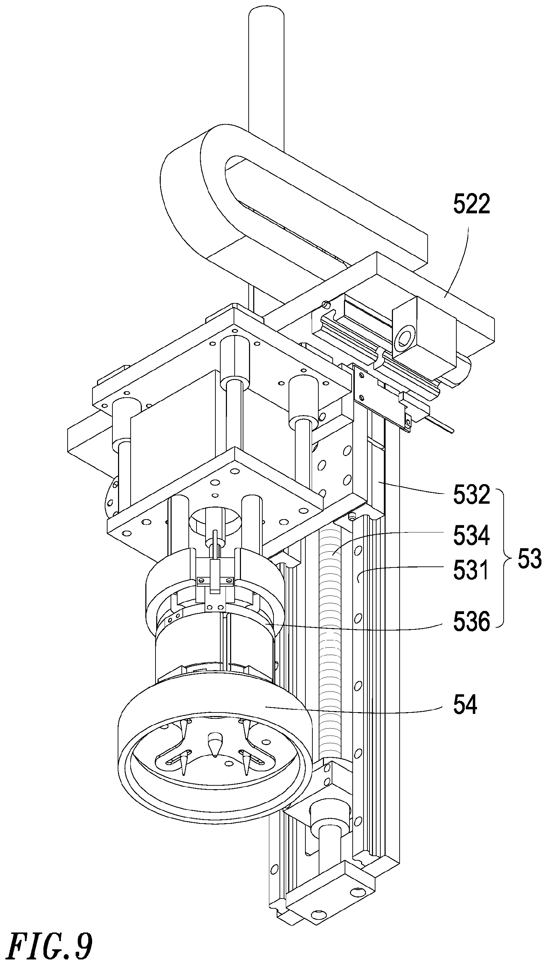

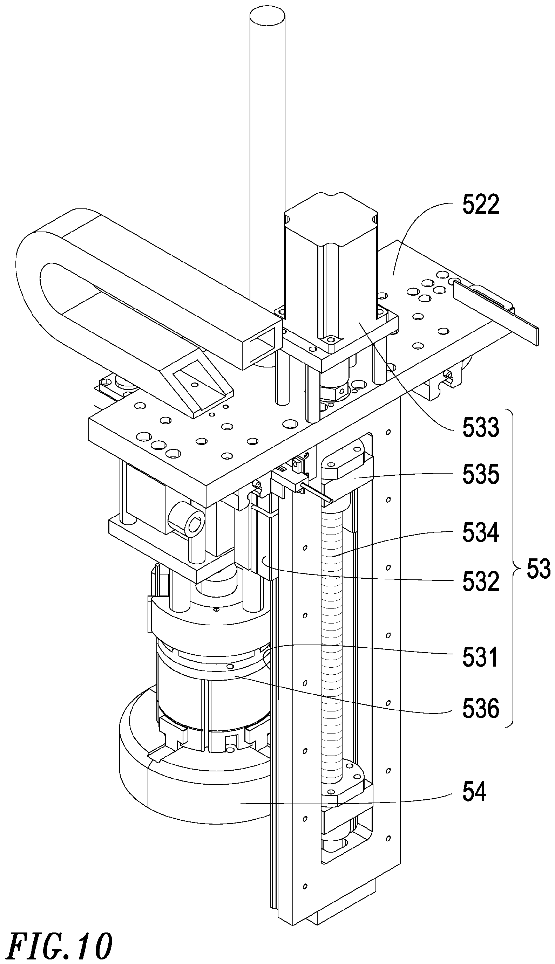

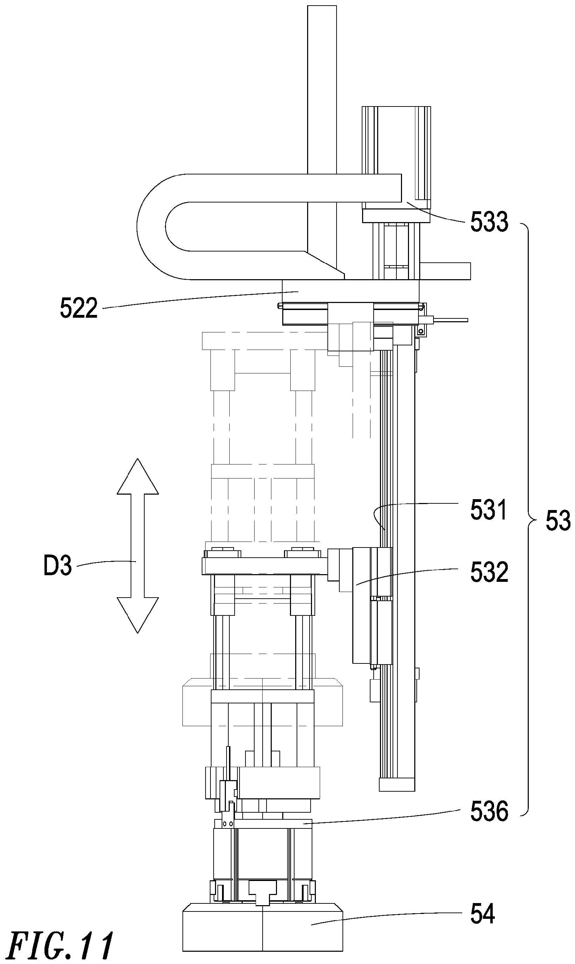

Regarding the third direction transmission device 53, please refer to Figures 9-11. The third direction transmission device 53 includes a third direction track 531, a third direction sliding seat 532, a third direction driving source 533, a third direction transmission shaft 534, a third direction transmission nut 535, and a rotation driving source 536. The third direction track 531 is parallel to the third direction D3. In the embodiment, the third direction D3 is directed toward the upper and lower directions of the machine station 11. There are two third direction tracks 531, and one end of them is respectively fixed on the second direction sliding seat 522. The third direction sliding seats 532 are placed transversely and installed on two third direction tracks 531. In one example, the third direction track 531 can be a protruding structure, and the third direction sliding seat 532 can be two concave structures, so that the third direction sliding seat 532 can be embedded in the third direction track 531 and slide. The third direction driving source 533 is also fixed on the second direction sliding seat 522. One end of the third direction transmission shaft 534 is disposed at one end of the third direction driving source 533, and the third direction transmission shaft 534 is also parallel to the third direction D3. The third direction driving source 533 can be a motor, which can drive the third direction transmission nut 535 to rotate. In practice, the third direction transmission shaft 534 is a ball screw with a thread above it, and a third direction transmission nut 535 is on the thread. The third direction transmission nut 535 is arranged at one side of the third direction sliding seat 532. When the third direction transmission shaft 534 rotates, the kinetic energy of the rotation of the third direction transmission shaft 534 can be converted into the kinetic energy of linear displacement through the third direction transmission nut 535. In this way, when the third direction transmission nut 535 displaces, it can be displaced together with the third direction sliding seat 532. Furthermore, the third direction sliding seat 532 can be driven to slide back and forth on the third direction track 531 toward the third direction D3. In addition, the rotation driving source 536 is fixed at the lower end of the third direction sliding seat 532. The robotic arm 54 is fixed at the lower end of the rotation driving source 536. The rotation driving source 536 can be a motor, which is used to drive the robotic arm 54 to rotate.

It should be noted that the robotic arm 54 refers to an automatic control device that imitates the functions of a human arm to finish various tasks. In the embodiment, the robotic arm 54 has a material grabbing opening formed by four annular shells, through which the top edge of the barrel 23 can be firmly grasped. In other embodiments, the robotic arm 54 can be any form of mechanical structure. As long as the barrel 23 can be grasped, it falls within the scope of the robotic arm 54 of the embodiment. Accordingly, the first direction transmission device 51, the second direction transmission device 52 and the third direction transmission device 53 drive the robotic arm 54 to perform three-axis linear motions in the first direction D1, the second direction D2 and the third direction D3 respectively. This facilitates the robotic arm 54 to transfer the barrel 23 between the glue placing area 2, the heating mechanism 3 and the injection molding mechanism 4, so that the robotic arm 54 can clamp the barrel 23 to a predetermined position and stop at the predetermined position.

In order to realize the traceability of the injection molding products, a glue code is provided on the surface of the barrel 23, and a product code is also provided on the injection molding products. The working process of the present invention are described as follows:
Step 1: The robotic arm 54 will clamp the barrel 23 from the assembly box 22 next to the first code scanning gun 14, and drive the robotic arm 54 to rotate together with the barrel 23 through the rotation driving source 536, so that the first code scanning gun 14 can scan and read the glue code of barrel 23 smoothly;
Step 2: After scanning the glue code, the robotic arm 54 puts the barrel 23 into the microwave box 31. The robotic arm 54 then closes the cover 33 over the glue access port 32 to facilitate heating of the barrel 23 in the microwave box 31;
Step 3: After finishing the heating of the barrel 23, the robotic arm 54 removes the cover 33 and then clamps the barrel 23 to the glue insulation barrel 41 for injection molding. At the same time as injection molding, the robotic arm 54 can repeat steps 1 and 2 for another barrel 23;
Step 4: After finishing the injection molding of the product, the product is manually taken out and brought to the second scanning gun 15 so that the second scanning gun 15 can scan the product code on the product. The product code can be bonded to the glue code of the injection molding, and then uploaded to a database.
Step 5: The robotic arm 54 takes out the barrel 23 from the glue insulation barrel 41 and puts it back into the assembly box 22. Steps 4 and 5 can be repeated for another barrel 23. Steps 1 and 2 can be repeated for still another barrel 23, and so on.

Based on the foregoing, when compared with other conventional technologies, the traceable low-pressure injection molding apparatus provided by the present invention provides the following advantages:
1. Through the first code scanning gun 14 and the second code scanning gun 15, the barrel 23 and the injection molding product are scanned and recorded respectively. The product code of the product, the glue code of the barrel 23 and the injection molding parameters can be bonded together and uploaded to the database. Afterwards, when it is needed to scan the product code on the injection molding product, the glue information used in the product will be quickly indicated along with the injection molding parameters, effectively providing traceability for product monitoring. Furthermore, if a defect occurs in the product, it can be traced back to the corresponding barrel 23, and the use of its barrel 23 for injection molding can be stopped. This can even stop the damage and greatly save the cost of injection molding.
2. The assembly box 22 stores multiple barrels 23. The barrels 23 can be heated in batches so that new and old (barrel 23) glues are not mixed together. The barrel 23 is replaced after each use, and thus there will be no residual old glue when injecting glue.
3. The cover 33 is used to cover the glue access port 32 to avoid the plastic particles from splashing out when the barrel 23 is heated in the microwave box 31, ensuring the safety of the machine and the workers.

The above disclosed embodiments are merely some of the preferred embodiments of the present invention, which are not intended to limit the present invention. Any person of ordinary knowledge in the art may make certain changes and modifications in understanding the foregoing technical features and embodiments of the present invention without departing from the spirit and scope of the present invention. Accordingly, the scope of patent protection for the present invention shall be as defined in the claim attached hereto.

## Claims

1. A traceable low-pressure injection molding apparatus (10), comprising:
a frame (1), comprising a machine station (11), wherein the machine station (11) is provided with a glue placing area (2), a heating mechanism (3), an injection molding mechanism (4) and a clamping mechanism (5), the glue placing area (2) is used to place a plurality of barrels (23), each of the barrels (23) is provided with a glue code, the clamping mechanism (5) is located above the glue placing area (2), the heating mechanism (3) and the injection molding mechanism (4) to clamp the barrels (23) and transfer between the glue placing area (2), the heating mechanism (3) and the injection molding mechanism (4), in order to use glue in the barrels (23) for manufacturing a product;
a first code scanning gun (14), installed on the machine station (11) and located adjacent to the heating mechanism (3), wherein the first code scanning gun (14) is used to scan the glue code; and
a second code scanning gun (15), installed on the machine station (11) and located adjacent to the injection molding mechanism (4), wherein the second code scanning gun (15) is used to scan a product code of the product.

2. The traceable low-pressure injection molding apparatus according to claim 1, wherein the glue placing area (2) comprises a support station (21) and an assembly box (22), the support station (21) is fixed on a top surface of the machine station (11), the assembly box (22) is disposed on the support station (21), the assembly box (22) comprises a hoarding body (221) and a barrel fixing plate (222), the hoarding body (221) is arranged on a periphery of the assembly box (22), the barrel fixing plate (222) is arranged above an interior of the hoarding body (221) so that a space for placing the barrels (23) is formed below the interior of the hoarding body (221), the barrel fixing plate (222) is provided with a plurality of openings (223), and the barrels (23) are placed within the hoarding body (221) and the barrel fixing plate (222) through the openings (223).

3. The traceable low-pressure injection molding apparatus according to claim 1 or 2, wherein a support frame (12) is provided on each side of the machine station (11), and a protective cover door (13) is provided on the support frame (12).

4. The traceable low-pressure injection molding apparatus according to claim 3, wherein the protective cover door (13) is composed of a plurality of folding doors (131).

5. The traceable low-pressure injection molding apparatus according to claim 1 or 2, wherein the heating mechanism (3) comprises a microwave box (31), a glue access port (32) and a cover (33), the microwave box (31) is disposed on the machine station (11), a glue access port (32) is disposed on a top surface of the microwave box (31), the glue access port (32) is used to transfer the barrels (23) into the microwave box (31), and the cover (33) is used to cover the glue access port (32).

6. The traceable low-pressure injection molding apparatus according to claim 1 or 2, wherein the injection molding mechanism (4) comprises a glue insulation barrel (41), a glue injection gun pump (42) and a driving source (43), the glue insulation barrel (41), the glue gun pump (42) and the driving source (43) are all arranged on the frame, the glue insulation barrel (41) is used to place the heated barrels (23), the glue insulation barrel (41) and the glue injection gun pump (42) are connected through a material connecting pipe, and one end of the driving source (43) is connected to one end of the glue injection gun pump (42).

7. The traceable low-pressure injection molding apparatus according to claim 1 or 2, wherein the clamping mechanism (5) comprises a first direction transmission device (51), a second direction transmission device (52), a third direction transmission device (53) and a robotic arm (54).

8. The traceable low-pressure injection molding apparatus according to claim 7, wherein the first direction transmission device (51) comprises a first direction track (511), a first direction sliding seat (512), a first direction transmission shaft (513) and a first direction driving source (514), the first direction track (511) is parallel to a first direction (D1), the first direction (D1) refers to front and rear directions of the machine station (11), the first direction track (511) is set above the machine station (11), the first direction sliding seat (512) is set above the first direction track (511), the first direction transmission shaft (513) is pivoted on the first direction sliding seat (512), the first direction driving source (514) is provided at one end of the first direction transmission shaft (513), the second direction transmission device (52) comprises a second direction track (521), a second direction sliding seat (522), a second direction transmission shaft (523), a second direction driving source (524) and a second direction transmission nut (525), the second direction track (521) is parallel to a second direction (D2), the second direction (D2) refers to left and right directions of the machine station (11), the second direction track (521) is set on the first direction sliding seat (512), the second direction sliding seat (522) is set on the second direction track (521), the second direction transmission shaft (523) is pivoted on the second direction sliding seat (522), the second direction transmission shaft (523) is also parallel to the second direction (D2), the second direction driving source (524) is arranged at one end of the second direction transmission shaft (523), the second direction transmission nut (525) is provided on the second direction transmission shaft (523), one side of the second direction transmission nut (525) is arranged below the second direction sliding seat (522), the third directional transmission device (53) comprises a third direction track (531), a third direction sliding seat (532), a third direction driving source (533), a third direction transmission shaft (534), a third direction transmission nut (535) and a rotation driving source (536), the third direction track (531) is parallel to a third direction (D3), the third direction (D3) refers to up and down directions of the machine station (11), one end of the third direction track (531) is fixed on the second direction sliding seat (522), the third direction sliding seat (532) is installed on the third direction track (531), the third direction driving source (533) is also fixed on the second direction sliding seat (522), one end of the third direction transmission shaft (534) is arranged at one end of the direction driving source (533), the third direction transmission shaft (534) is also parallel to the third direction (D3), the third direction transmission nut (535) is provided on the third direction transmission shaft (534), the third direction transmission nut (535) is arranged at one side of the third direction sliding seat (532), the rotation driving source (536) is fixed at a lower end of the third direction sliding seat (532), and the robotic arm (54) is fixed at a lower end of the rotation driving source (536).
